(19) 

Europäisches
Patentamt

European
Patent Office

Office européen
des brevets

(11) **EP 3 988 903 A1**

(12) **EUROPEAN PATENT APPLICATION**

(43) Date of publication:
**27.04.2022 Bulletin 2022/17**

(21) Application number: **21190602.9**

(22) Date of filing: **10.08.2021**

(51) International Patent Classification (IPC):
***G01D 5/20*** *(2006.01)*

(52) Cooperative Patent Classification (CPC):
**G01D 5/204; G01D 5/2073**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.10.2020 EP 20203390**

(71) Applicant: **Renesas Electronics America Inc.
Milpitas, California 95035 (US)**

(72) Inventors:
• **PICHLER, Rudolf**
  **8152 Stallhofen (AT)**
• **JANISCH, Josef**
  **8262 Ilz (AT)**
• **OSWALD, Thomas**
  **8053 Graz (AT)**

(74) Representative: **Lippert Stachow Patentanwälte
Rechtsanwälte
Partnerschaft mbB
Krenkelstraße 3
01309 Dresden (DE)**

(54) **POSITION SENSOR SYSTEM**

(57)    The invention relates to a position sensor system, particularly inductive position sensor system, comprising at least two receiver coil sets, at least one transmitter coil and a signal conditioning and processing unit, wherein in each receiver coil set comprises at least two separate receiver coils, particularly a sine receiver coil and a cosine receiver coil, which is characterized in that the signal conditioning and processing unit is contained in a single integrated circuit and that the at least two receiver coil sets, the at least one transmitter coil and the integrated circuit containing the signal conditioning and processing unit are located on a single printed circuit board.

Fig. 12

**Description**

The invention relates to a position sensor system, particularly an inductive position sensor system.

This patent proposal is particularly describing a specific setup of an inductive position sensor system allowing measurement of one or more physical quantities of same or different types by using a coil set of two or more independent receiver coils and one or more transmitter coils.

Inductive position sensors implement a magnet-free technology, utilizing the physical principles of eddy currents or inductive coupling to detect the position of a target that is moving above a set of coils, consisting for example of one transmitter coil and two receiver coils, particularly a sine receiver coil and a cosine receiver coil.

In a practical implementation the three coils, one transmitter coil and two receiver coils are typically provided as copper traces on a printed circuit board (PCB). They are arranged such that the transmitter coil induces a secondary voltage in the two receiver coils, which depends on the position of the metallic target above the coils.

A signal representative of the target's position over the coils is obtained by demodulating and processing the secondary voltages from the receiver coils. The target can be any kind of metal, such as aluminum, steel, or a printed circuit board (PCB) with a printed copper layer.

Usually, an inductive sensor system comprises a metallic target. However, the inductive sensor system may use different types of targets, such as wire loops or passive resonant circuits comprised of inductances and capacitors.

Most inductive sensor systems comprise two receiver coils per sensor, particularly a sine receiver coil and a cosine receiver coil. Other embodiments of inductive sensor systems may be using three receiver coils instead of two for each sensor.

Depending on the requirement, these coils can be designed for linear, arc or rotary motion.

The inductive sensor systems known from the art have a single set of receiver coils and one transmitter coil. An oscillator generates a radio-frequency signal, which is applied to the transmitter coil to create a high frequency magnetic field. This high frequency magnetic field is picked up by the receiver coils, particularly the sine receiver coil and the cosine receiver coil. Depending on the position of the metallic target over the coils, the secondary voltage picked up by the receiver coils is changing in amplitude and phase, allowing the determination of the target's position by analysing these effects.

After filtering, the receiver signals are demodulated and amplified, then converted to a digital signal by an analog-to-digital converter and further processed in a digital signal processor, like being converted from sine and cosine signals into an angle representation by means of a CORDIC algorithm, transforming rectangular coordinates to polar coordinates:

$$\alpha = arctan \frac{V_{SIN}}{V_{COS}}$$

Following this digital signal processing, a signal representative of the target's position over the coils is available in digital format and fed to the output interface.

Typical types of output interfaces include, but are not limited to:

1. Analog ramp

2. Pulse width modulated (PWM)

3. Single Edge Nibble Transmission Protocol (SENT)

4. I2C protocol

5. Serial Peripheral Interface (SPI)

6. Universal Asynchronous Receiver Transmitter (UART)

7. Supply Current modulation

8. Peripheral Sensor Interface 5 (PSI5)

9. Controller Area Network (CAN)

10. Local Interconnect Network (LIN)

Along with the typical implementation described above, there are further applications requiring redundancy or a combination of more than one position sensors including processing of the signals.

These applications may include, but are not limited to:

1. Sensors with high functional safety requirements

   a. redundant sensors measuring the same physical property

   b. sensors that process the input signals of two or more receiver coils to increase diagnostic coverage

2. High resolution absolute sensors processing two or more input signals

   a. Vernier sensors, merging the result of two sensors, each having different numbers of periods into one combined signal, allowing multiturn or long stroke linear measurements

b. combining a high resolution incremental angle signal with a low resolution absolute signal

3. Torque sensors: comparing the mechanical position at each end of a torsion beam to determine torque

4. Sensors with multiple outputs providing raw signals or processed signals

    a. Torque and Angle Sensors

    b. Angle and Speed Sensors

    c. Linear Position and Torque sensors

    d. Angle and Multiturn Sensors

    e. etc.

In these cases, two or more inductive sensors are used in prior art. Particularly in high safety relevant applications, such as vehicle steering or brake systems, a redundancy is often required in fail-safe or fail operational systems.

Other embodiments of prior art use two separate sensors (position sensor #1 and position sensor #2), but share the same transmitter coil (Tx1).

This invention relates to position sensor systems, particularly inductive position sensor systems, with high functional safety requirement and need for redundancy requiring a small chip size for implementation.

The position sensor system, particularly inductive position sensor system, according to the invention comprises at least two receiver coil sets, at least one transmitter coil and a signal conditioning and processing unit,

wherein in each receiver coil set comprises at least two separate receiver coils, particularly a sine receiver coil and a cosine receiver coil,

which is characterized in that

the signal conditioning and processing unit is contained in a single integrated circuit and that the at least two receiver coil sets, the at least one shared transmitter coil and the integrated circuit containing the signal conditioning and processing unit are located on a single printed circuit board.

An integrated circuit according to the invention is a set of electronic circuits on one small flat piece of semiconductor material, also referred to as silicone chip. Such integrated circuits are often contained in packages with connecting pins for connecting the integrated circuit to other electronic circuits, which are for example arranged on a printed circuit board (PCB).

According to the present invention the signal conditioning and processing unit for the at least two receiver coil sets and the at least one transmitter coil is contained in a single integrated circuit. Furthermore, the at least two receiver coil sets, the at least one transmitter coil and the integrated circuit containing the signal conditioning and processing unit are located on a single printed circuit board. Thereby, the required chip size is reduced, while still providing redundant receiver coil sets required by a high functional safety system.

In a variant of the invention the signal conditioning and processing unit comprises a separate receiver channel for each receiver coil set or a shared receiver channel and a multiplexer for multiplexing the at least two receiver coil sets sequentially to the shared receiver channel. A separate receiver channel for each set of receiver coils provides faster signal processing due to the parallel processing of the signals from the receiver coil sets, while a shared receiver channel with a multiplexer for multiplexing the at least two receiver coil sets sequentially to the shared receiver channel requires less chip size.

Pursuant to a variant of the invention wherein each receiver channel comprises a radio-frequency signal receiver and processor, an analog-to-digital converter and a digital signal processor.

According to a preferred variant of the invention the signal conditioning and processing unit comprises an oscillator for generating a radio-frequency signal for the at least one transmitter coil.

The position sensor system according to a variant of the invention can comprise a shared transmitter coil for the at least two receiver coil sets, which is connected to the oscillator of the signal conditioning and processing unit. Alternatively, the position sensor system can comprise separate transmitter coils for the at least two receiver coil sets, wherein the separate receiver coil sets are connected in series or parallel to the oscillator of the signal conditioning and processing unit.

In a variant of the invention the signal conditioning and processing unit has a common output, particularly for providing a combined output signal information for all receiver coil sets respectively all receiver channels of the signal conditioning and processing unit.

According to a preferred variant of the invention the position sensor system comprises at least one moving target, particularly at least one metallic moving target or any other target structure that is modifying the electromagnetic field of the at least of transmitter coil. Theoretically, the position sensor system can be manufactured and sold without the moving target and only cooperates with the metallic target once used for its intended purpose. However, the metallic target and the position sensor system are adapted to each other, so that the position sensor system can securely determine the position of the metallic target.

The inductive position sensor system according to the invention is for example a linear, arc or rotary motion sensor.

In a variant of the invention the at least one transmitter coil is arranged outside the at least two receiver coil sets, particularly at the outer circumference of the at least two receiver coil sets, or inside a blank space provided by the at least two receiver coil sets.

Pursuant to a preferred variant of the invention the position sensor system generates a high-resolution position signal from the at least two receiver coil sets or a differential signal from the at least two receiver coil sets.

The position sensor system provides information for all receiver coil sets by means of an output interface, such as, but not limited to analog voltage, current modulation, PSI-5, Pulse width modulation (PWM), Single Edge Nibble Transmission Protocol (SENT), I2C protocol, Serial Peripheral Interface (SPI), Universal Asynchronous Receiver Transmitter (UART), CAN, or LIN.

According to a variant of the invention the position output accuracy can be improved by using additional coil inputs for determining disturbing quantities and compensating for these.

In the following the prior and the position sensor system according to the invention will be explained with respect to embodiments shown in the attached figures. It shows:

Fig. 1     a first embodiment of a position sensor system according to the prior art,

Fig. 2     a practical implementation of the position sensor system shown in Fig. 1,

Fig. 3     a second embodiment of a position sensor according to the prior art,

Fig. 4     a third embodiment of a position sensor according to the prior art,

Fig. 5     a fourth embodiment of a position sensor system according to the prior art,

Fig. 6     a fifth embodiment of a position sensor system according to the prior art,

Fig. 7     a sixth embodiment of a position sensor system according to the prior art,

Fig. 8     a seventh embodiment of a position sensor system according to the prior art,

Fig. 9     an eighth embodiment of a position sensor system according to the prior art,

Fig. 10    a first embodiment of a system using two position sensors according to the prior art,

Fig. 11    a second embodiment of a system using two position sensors according to the prior art,

Fig. 12    a first embodiment of a position sensor system according to the invention,

Fig. 13    a second embodiment of a position sensor system according to the invention,

Fig. 14    a third embodiment of a position sensor system according to the invention,

Fig. 15    a fourth embodiment of a position sensor system according to the invention,

Fig. 16    a fifth embodiment of a position sensor system according to the invention,

Fig. 17    a sixth embodiment of a position sensor system according to the invention,

Fig. 18    a seventh embodiment of a position sensor system according to the invention,

Fig. 19    sensor outputs of the position sensor system shown in Fig. 18,

Fig. 20    an eighth embodiment of a position sensor system according to the invention,

Fig. 21    a nineth embodiment of a position sensor system according to the invention,

Fig. 22    a tenth embodiment of a position sensor system according to the invention,

Fig. 23    an eleventh embodiment of a position sensor system 1 according to the invention, and

Fig. 24    a twelfth embodiment of a position sensor system 1 according to the invention.

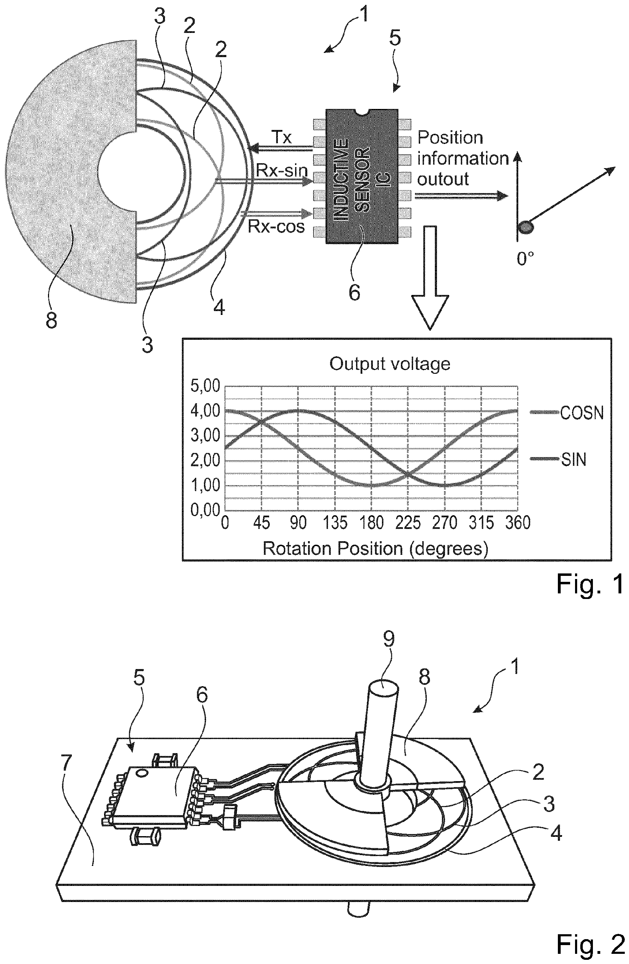

Fig. 1 shows a first embodiment of a position sensor system 1 according to the prior art. The position sensor system 1 shown in Fig. 1 is an inductive position sensor system comprising a receiver coil set 2, 3, a transmitter coil 4 and a signal conditioning and processing unit 5. The receiver coil set 2, 3 of the inductive position sensor 1 of Fig. 1 comprises a sine receiver coil 2 and a separate cosine receiver coil 3. The signal conditioning and processing unit 5 is contained in an integrated circuit 6. The position sensor system 1 implements a magnet-free technology, utilizing the physical principles of eddy currents or inductive coupling to detect the position of a target 8 that is moving above a set of coils 2, 3, 4, consisting for example of one transmitter coil 4 and two receiver coils 2, 3 as shown in Fig. 1.

Fig. 1 further shows the output signals of the position sensor system 1 over a 360° movement of the rotating target 8 for the sine receiver coil 2 and the cosine receiver coil 3.

Fig. 2 shows a practical implementation of the position sensor system 1 shown in Fig. 1, particularly for detecting rotary motion. In this practical implementation the three coils 2, 3, 4, namely the one transmitter coil 4 and two receiver coils 2, 3 are typically provided as copper traces on a printed circuit board 7. They are arranged such that the transmitter coil 4 induces a secondary voltage in the two receiver coils 2, 3, which depends on the position of the metallic target 8 above the coils 2, 3, 4.

The signal conditioning and processing unit 5 is located on the same printed circuit board 7 as the three coils 2, 3, 4. The target 8 is mounted to a rotating shaft 9, which rotary motion should be detected.

A signal representative of the target's 8 position over the coils 2, 3, 4 is obtained by demodulating and processing the secondary voltages from the receiver coils 2, 3. The target 8 can be any kind of metal, such as aluminum, steel, or a PCB with a printed copper layer.

This invention depicts an inductive sensor system 1 comprising of a metallic target 8. Other embodiments of inductive sensor systems 1 for which this invention can also be applied may use different types of targets 8, such as wire loops or passive resonant circuits comprised of inductances and capacitors.

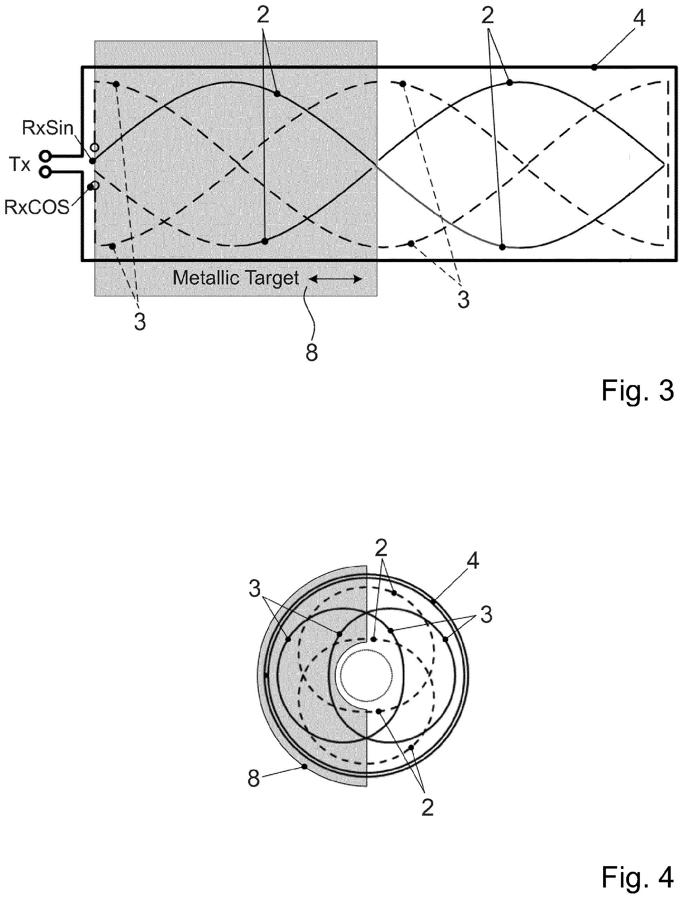

Fig. 3 shows a second embodiment of a position sensor according to the prior art. The position sensor comprises a sine receiver coil 2 and a cosine receiver coil 3, each having one positive and one negative period. The sine receiver coil 2 and the cosine receiver coil 4 are surrounded a transmitter coil 4. The coils 2, 3, 4 are arranged along a linear path to detect a linear motion of the target 8.

Fig. 4 shows a third embodiment of a position sensor according to the prior art. The third embodiment of Fig. 4 differs from the second embodiment of Fig. 3 in that the coils 2, 3, 4 are arranged circularly for detecting a rotary motion of target 8.

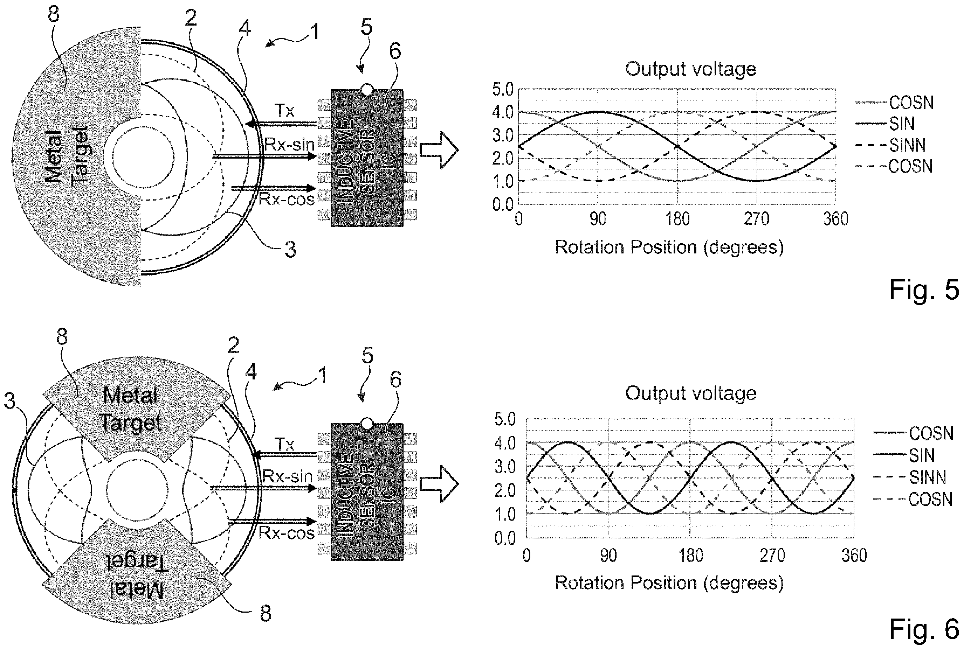

Fig. 5 to 8 show fourth to seventh embodiments of position sensor system 1 according to the prior art. Each position sensor system 1 of the fourth to seventh embodiment comprises a sine receiver coil, a cosine receiver coil 3 and a transmitter coil. The signals of the receiver coils 2, 3 are processed by a signal conditioning and processing unit 5, which is contained in an integrated circuit 6. The position sensor systems 1 of Fig. 5 to

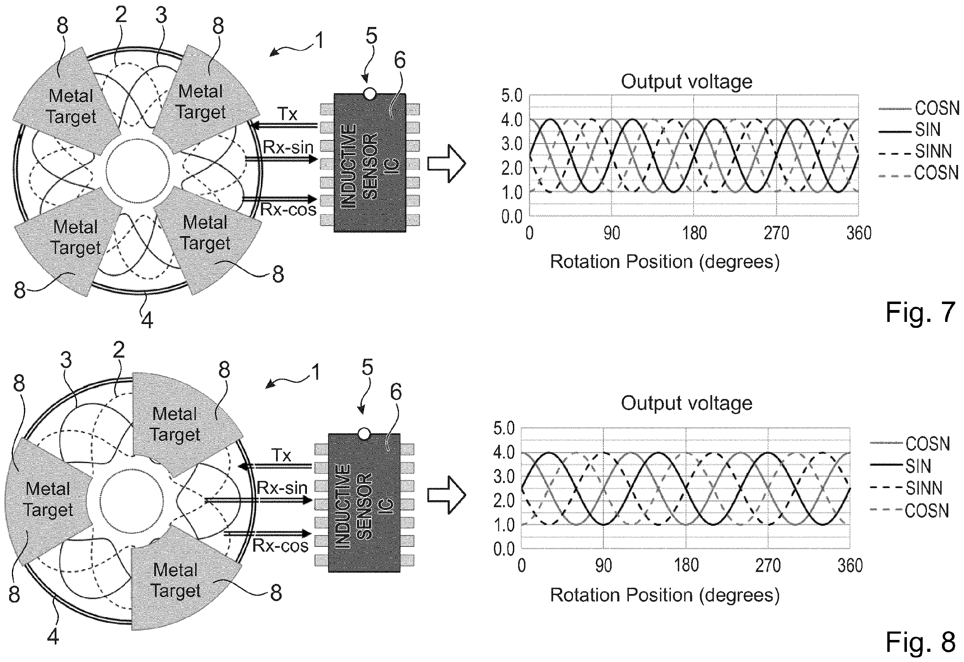

Fig. 8 are designed for detecting rotary motion of one or more targets 8.

The sine receiver coil 2 and the cosine receiver coil 3 each have one or more positive periods and one or more negative periods. The fourth to seventh embodiment differ in the number of periods and number of targets. According to the fourth embodiment the sine receiver coil 2 and the cosine receiver coil 3 each have one positive period and one negative period, while the motion of a single target 8 is detected. According to the fifth embodiment the sine receiver coil 2 and the cosine receiver coil 3 each have two positive periods and two negative periods, while the motion of two targets 8 are detected.

According to the sixth embodiment the sine receiver coil 2 and the cosine receiver coil 3 each have four positive periods and four negative periods, while the motion of four targets 8 are detected. According to the seventh embodiment the sine receiver coil 2 and the cosine receiver coil 3 each have three positive periods and three negative periods, while the motion of three targets 8 are detected.

Depending on the requirement, the coils 2, 3, 4 can be designed for linear, arc or rotary motion. A coil design for a linear motion sensor is shown in Fig. 3 and examples of rotary coil designs having different numbers of phases per turn are shown in Fig. 4 to Fig. 8.

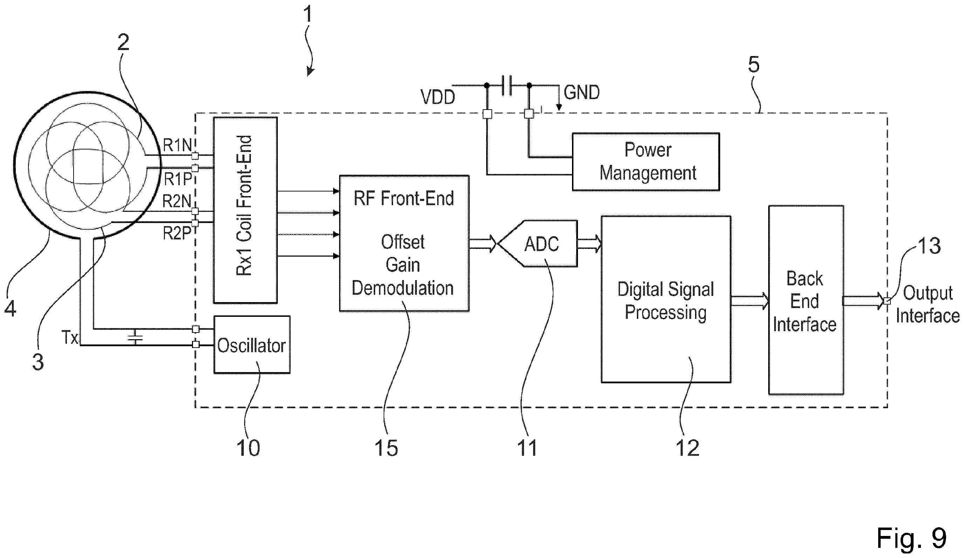

Fig. 9 shows an eighth embodiment of a position sensor system 1 according to the prior art. Shown in Fig. 9 is the block diagram of a position sensor system 1 having a single set of receiver coils 2, 3 and one transmitter coil 4. An oscillator 10 of the signal conditioning and processing unit 5 generates an RF signal, which creates a high frequency magnetic field by the transmitter coil 4, which is picked up by the receiver coils 2, 3 with terminals R1N/R1P and R2N/R2P. Depending on the position of the metallic target 8 over the coils 2, 3, 4, the secondary voltage picked up by the receiver coils 2, 3 is changing in amplitude and phase, allowing the determination of the target's position by analysing these effects.

After filtering, the receiver signals are demodulated and amplified, then converted to a digital signal by an A-D converter 11 and further processed in the digital signal processor 12, like being converted from sine and cosine signals into an angle representation by means of a CORDIC algorithm, transforming rectangular coordinates to polar coordinates.

$$\alpha = arctan \frac{V_{SIN}}{V_{COS}}$$

Following this digital signal processing, a signal representative of the target's position over the coils 2, 3, 4 is available in digital format and fed to the output interface 13.

Typical types of output interfaces 13 include, but are not limited to:

1. Analog ramp

2. Pulse witdh modulated (PWM)

3. Single Edge Nibble Transmission Protocol (SENT)

4. I2C protocol

5. Serial Peripheral Interface (SPI)

6. Universal Asynchronous Receiver Transmitter (UART)

7. Supply Current modulation

8. Peripheral Sensor Interface 5 (PSI5)

9. Controller Area Network (CAN)

10. Local Interconnect Network (LIN)

Along with the typical implementation described above, there are further applications requiring redundancy or a combination of more than one position sensors 1 including processing of the signals.

These applications may include, but are not limited to:

1. Sensors 1 with high functional safety requirements

    a. redundant sensors 1 measuring the same physical property

    b. sensors 1 that process the input signals of two or more receiver coils 2, 3 to increase diagnostic coverage

2. High resolution absolute sensors 1 processing two or more input signals

    a. Vernier sensors 1, merging the result of two sensors 1, each having different numbers of periods into one combined signal, allowing multiturn or long stroke linear measurements

    b. combining a high resolution incremental angle signal with a low resolution absolute signal

3. Torque sensors 1: comparing the mechanical position at each end of a torsion beam to determine torque

4. Sensors 1 with multiple outputs providing raw signals or processed signals

    a. Torque and Angle Sensors 1

    b. Angle and Speed Sensors 1

    c. Linear Position and Torque sensors 1

    d. Angle and Multiturn Sensors 1

    e. etc.

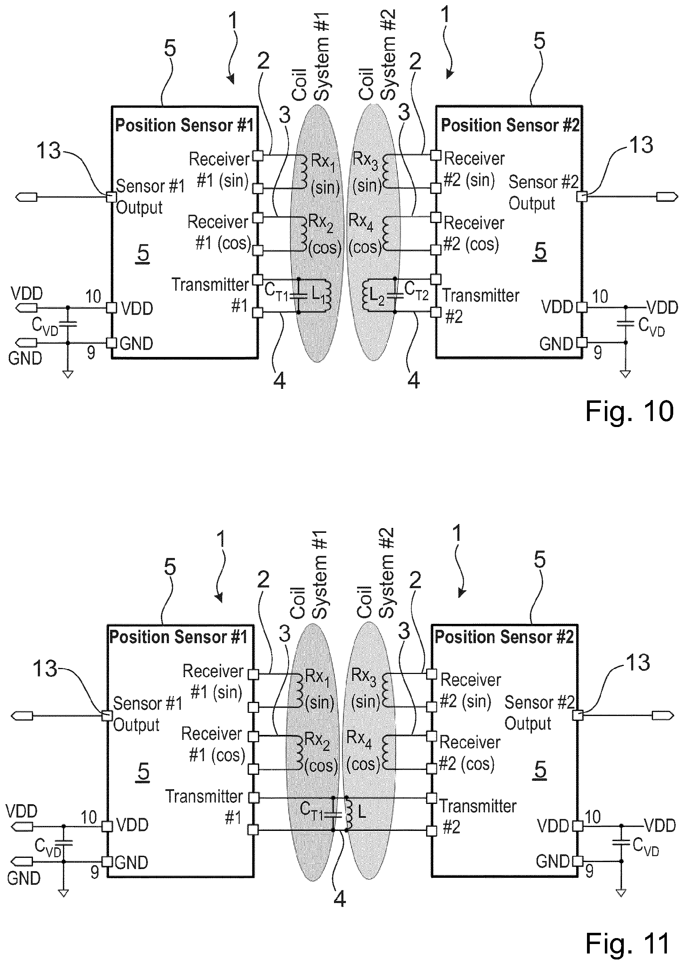

In these cases, two or more inductive position sensors 1 are used in prior art, as shown in Fig. 10. Particularly in high safety relevant applications, such as vehicle steering or brake systems, a redundancy is often required in fail-safe or fail operational systems. Fig. 10 shows a first embodiment of a system 1 using two position sensors 1 according to the prior art.

Other embodiments of prior art use two separate sensors 1 (position sensor #1 and position sensor #2) but share the same transmitter coil 4 (Tx1). Such sensor 1 is shown in Fig. 11, which shows a second embodiment of a system 1 using two position sensors 1 according to the prior art.

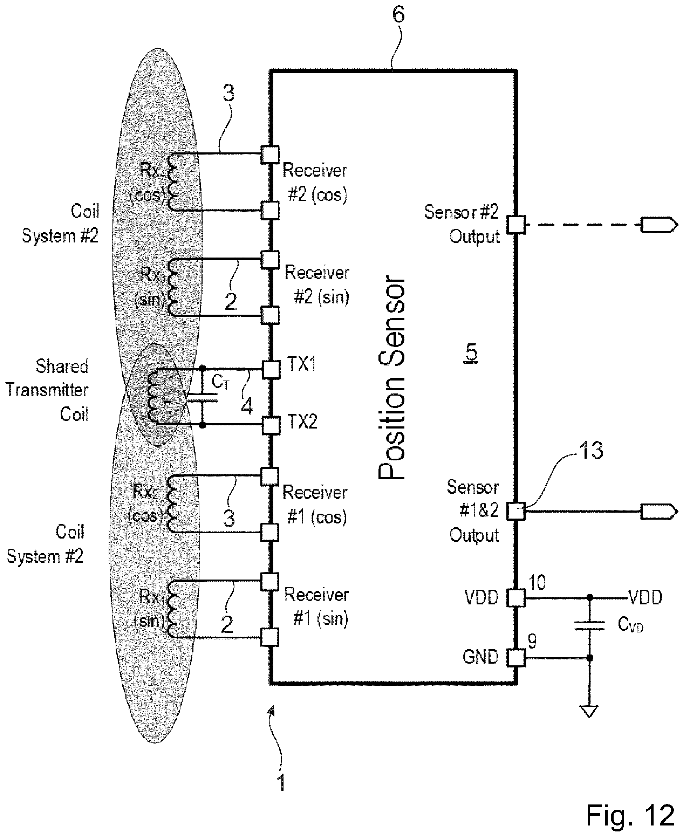

Fig. 12 shows a first embodiment of a position sensor system 1 according to the invention. This invention is targeting systems with high functional safety requirement and need for redundancy by implementing the signal processing of two or more sets of receiver coils 2, 3 with one or more transmitter coils 4 on the same on the same printed circuit board 7 while the receiver coils 2, 3 sensing elements are fully redundant and physically separated. An outline of such implementation having two sets of receiver coils 2, 3 is shown in Fig. 12. In other embodiments of this configuration, three or more sets of receiver coils 2, 3 can be implemented.

The position sensor system 1 of Fig. 12 is an inductive position sensor system, comprising two receiver coil sets 2, 3, one transmitter coil 4 and a signal conditioning and processing unit 5. Each receiver coil set comprises a sine receiver coil 2 and a cosine receiver coil 3. According to the present invention the signal conditioning and processing unit 5 is contained in a single integrated circuit 6 and that the at least two receiver coil sets 2, 3, the transmitter coil 4 and the integrated circuit 6 containing the signal conditioning and processing unit 5 are located on a single printed circuit board 7.

Generally, each receiver (Receiver #1 and Receiver #2 in Fig. 12) can be used for detecting both the same or independent moving target elements 8 and they share one or more transmitter coils 4 on the same chip.

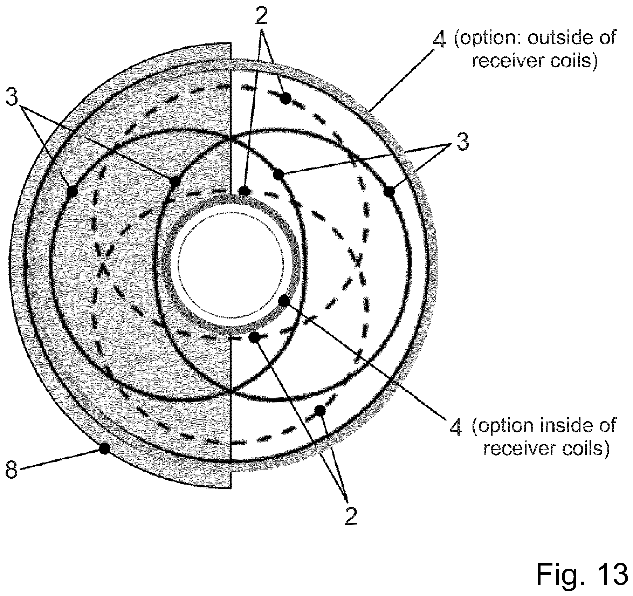

Fig. 13 shows a second embodiment of a position sensor system 1 according to the invention. Fig. 13 particularly refers to the position of the transmitter coil 4 with respect to the at least two receiver coil sets 2, 3. The transmitter coil 4 can be placed outside the at least two receiver coil sets 2, 3, particularly at the outer circumference of the receiver coil sets 2, 3, as shown in Fig. 13. Other embodiments of this invention may have the transmitter coil 4 placed inside a blank space provided by the receiver coil sets 2, 3, as also shown in Fig. 13.

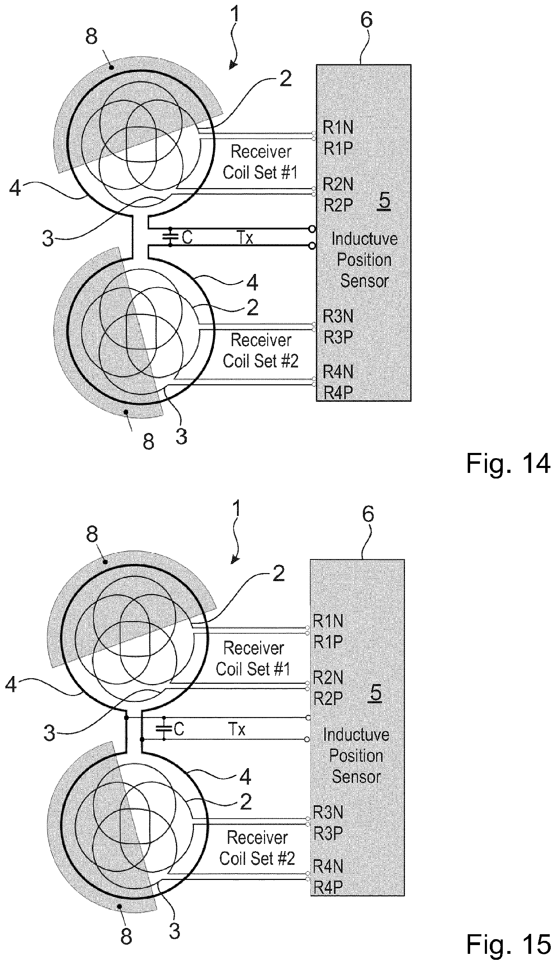

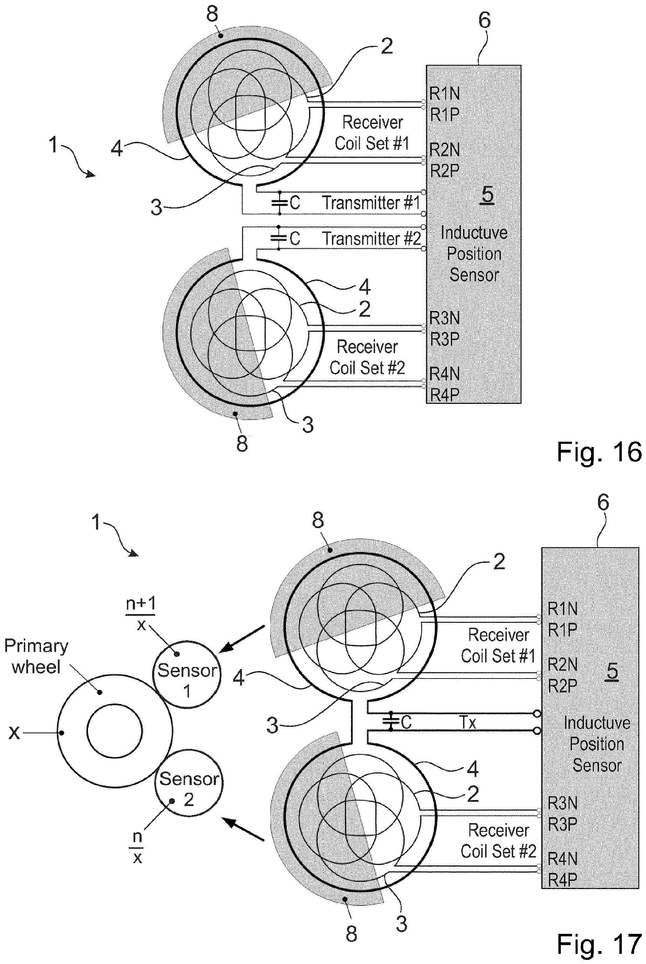

Fig. 14 shows a third embodiment of a position sensor system 1 according to the invention, Fig. 15 a fourth embodiment of a position sensor system 1 according to the invention and Fig. 16 a fifth embodiment of a position sensor system 1 according to the invention. Each of these position sensor systems 1 shown in Figs. 14 to 16 comprises two receiver coil sets 2, 3, each receiver coil set 2, 3 comprising a sine receiver coil 2 and a cosine receiver coil 3. Connectors of the sine receiver coils of the two coil receiver coil sets are labelled R1N/R1P respectively R3N/R3P and connectors of the cosine receiver coils of the two receiver coil sets 2, 3 are labelled R2N/R2P respectively R4N/R4P. Each receiver coil set 2, 3 detects a different target 8. Furthermore, each position sensor systems 1 shown in Figs. 14 to 16 comprise two transmitter coils 4 and a single signal conditioning and processing unit 5. According to the third embodiment shown in Fig. 14 the two transmitter coils 4 are connected in series and are fed by the same oscillator 10 of the signal conditioning and processing unit 5. According to the fourth embodiment shown in Fig. 15 the two transmitter coils 4 are connected in parallel and are fed by the same oscillator 10 of the signal conditioning and processing unit 5. According to the fifth embodiment shown in Fig. 16 the two transmitter coils 4 are separated from each other and are fed by independent oscillators 10 of the signal conditioning and processing unit 5.

A practical implementation of the configuration shown in Fig. 14 to Fig. 16 could be a multiturn sensor having a primary wheel and two attached secondary wheels, each having a slightly different transmission ratio relative to the primary wheel. A metallic target 8 is attached to each of the secondary wheels, each target is detected independently by receiver coil sets #1 and #2, respectively. Such a sixth embodiment based on the position sensor 1 of Fig. 14 is shown in Fig. 17.

Note: while the abovementioned multiturn sensor 1 is prior art, the innovative aspect of this example is to use a single integrated circuit having two sets of receiver coils 2, 3 instead of using one position sensor 1 for each secondary wheel.

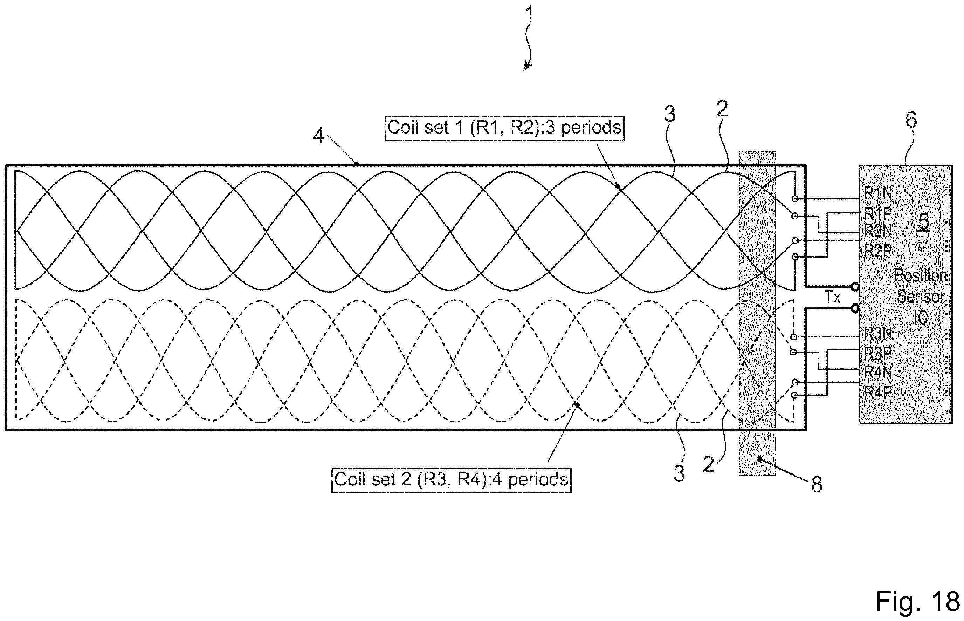

A seventh embodiment utilizing two receiver coil sets 2, 3 and one transmitter coil 4 shown in Fig. 18 is a dual receiver coil setup example for creating a long stroke Vernier design using 3 periods on coil set 1 (R1N, R1P, R2N, R2P) and 4 periods on coil set 2 (R3N, R3P, R4N, R4P). The receiver coil sets #1 and #2 may be placed next to each other (as shown in Fig. 18) or placed on top of each other.

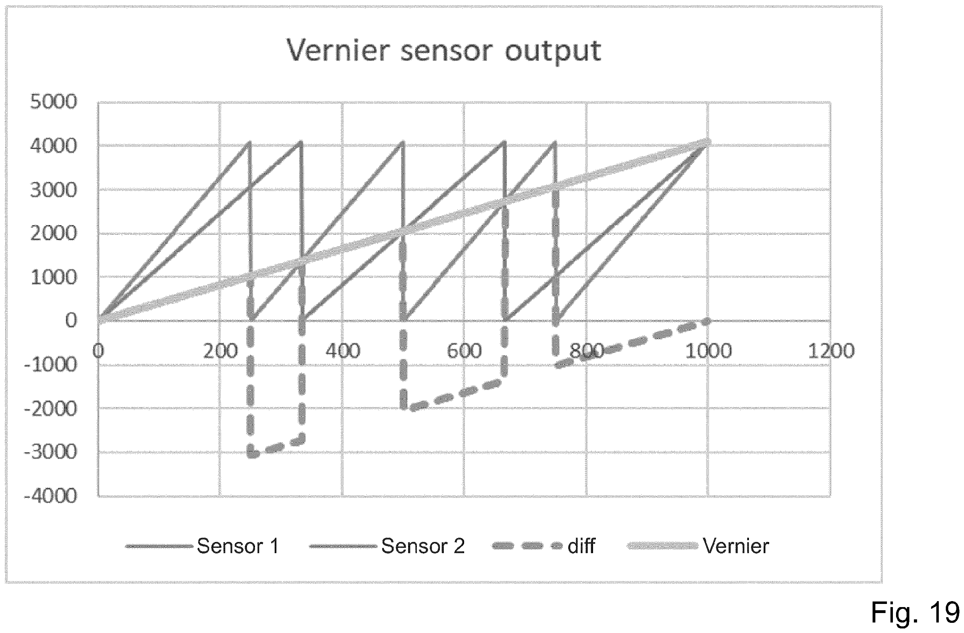

Fig. 19 outlines the sensor outputs of the circuit shown in Fig. 18, using 3 phases for Sensor 1 (receiver coils R1,R2) and 4 phases for Sensor 2 (receiver coils R3,R4). In this example, each sensor has 12-bits resolution (4096 steps per phase).

By utilizing the Vernier principle through using the mathematical difference of both signals (dotted line) and correcting negative results (Line "Vernier"), the signal of both sensors can be combined to provide a single unambiguous, linear signal over the full stroke of the sensor, shown as "Vernier" on Fig. 19.

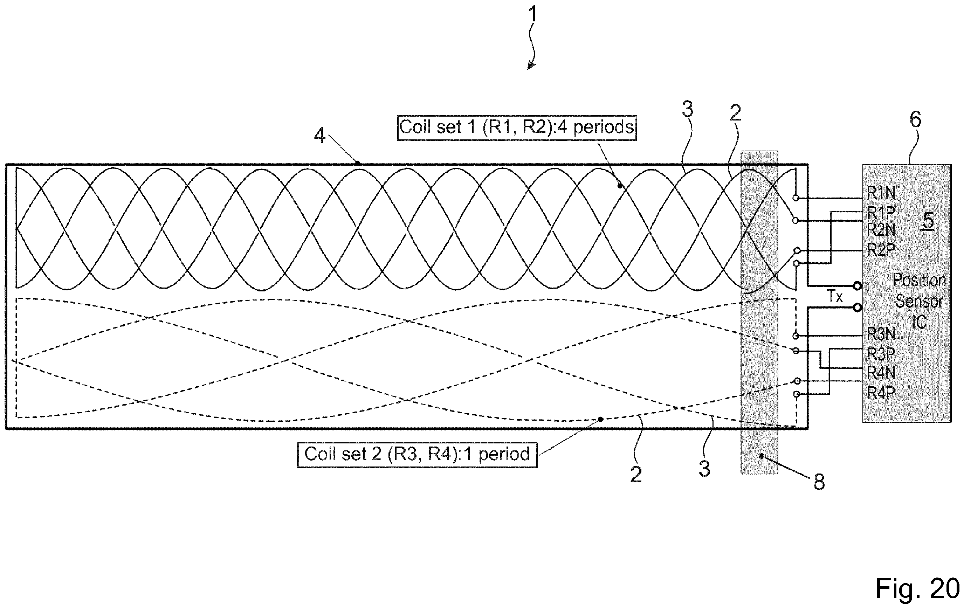

In an eighth embodiment, as shown in Fig. 20, the first receiver coil set 2, 3 is using 4 periods per full stroke length, while the second receiver coil set 2, 3 is using 1 period per full stroke length. This configuration allows an increase of resolution by a factor of four, respectively by the number of phases of coil set #1.

While the position obtained from coil set #1 is ambiguous, providing four possible positions within the full stoke length, the positon obtained from coil set #2 is unambiguous, providing only one possible position within the full stroke length.

However due to the long stretch of coil set #2, it provides reduced resolution, for example 4096 steps over the full stroke length, while the first coil set #1 provides $4 \times 4096 = 16384$ positions over the full stroke length. By analyzing the position of coil set #2, the period on coil set #1 over which the target 8 is moving, can be determined and thus, an unambiguous, high-resolution position detection is possible, providing an absolute position with 16384 positions over the full stroke length. Other embodiments of the same implementation may use different resolutions than 4096 steps per period.

In the same manner as the embodiment shown in Fig. 18, the embodiment of Fig. 20 may be placing coil sets #1 and #2 next to each other or on top of each other.

In all embodiments of the invention the signal conditioning and processing unit 5 is contained in a single integrated circuit 6 and that the at least two receiver coil sets 2, 3, the at least one transmitter coil 4 and the integrated circuit 6 containing the signal conditioning and processing unit 5 are located on a single printed circuit board 7.

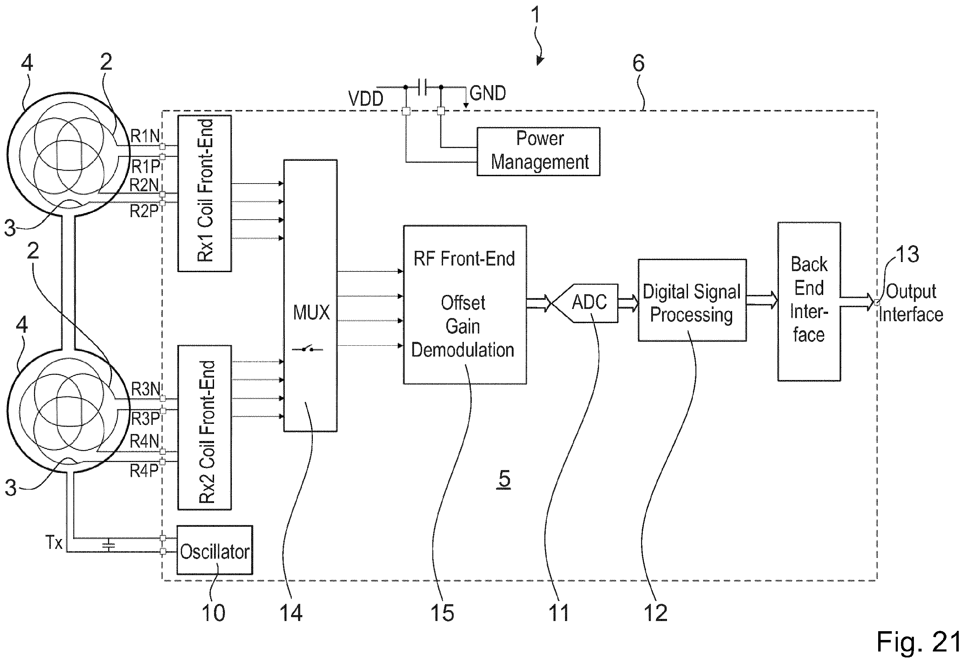

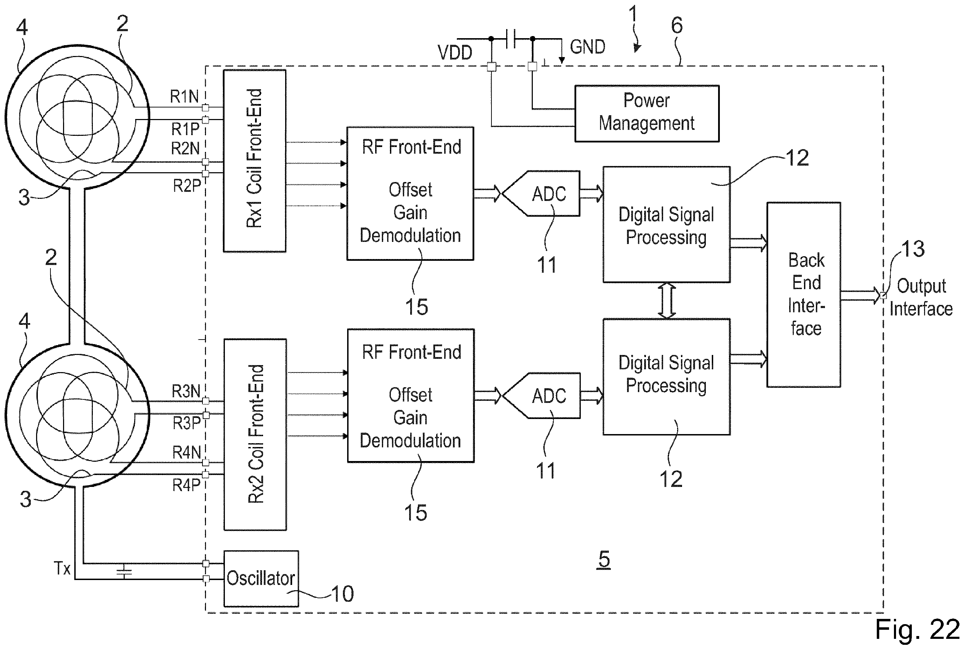

Fig. 21 shows a nineth embodiment of a position sensor system 1 according to the invention and Fig. 22 shows a tenth embodiment of a position sensor system 1 according to the invention.

Shown in Figs. 21 and 22 are two possible implementations of a multi-receiver coil set position sensor 1 on a single chip. In Fig. 21, two sets of receiver coils 2, 3 are processed sequentially, selected by a multiplexer 14 at the RF front-end block. This set-up requires fewer building blocks, as it utilizes the same chain of signal processing, following the multiplexer (MUX) for both receiver coil sets. This embodiment is also referred to as having a shared receiver channel. The multiplexer 14 is for multiplexing the at least two receiver coil sets 2, 3 sequentially to the shared receiver channel.

This principle may be applied to more than two receiver coil sets 2, 3.

In Fig. 22, the two sets of receiver coils 2, 3 are processed in parallel receiver channels, essentially doubling the processing speed. This setup is particularly useful for applications requiring fast data rates and low or no signal delay between each receiver coil set.

Each receiver channel comprises a radio-frequency signal receiver and processor 15, an analog-to-digital converter 11 and a digital signal processor 12.

The signal-processing unit 12 converts the input voltages into digital values. Offsets and amplitude mismatch of these signals is compensated. The angle information is calculated based on the compensated input data and the phase shift between the two coil sets 2, 3 is digitally removed.

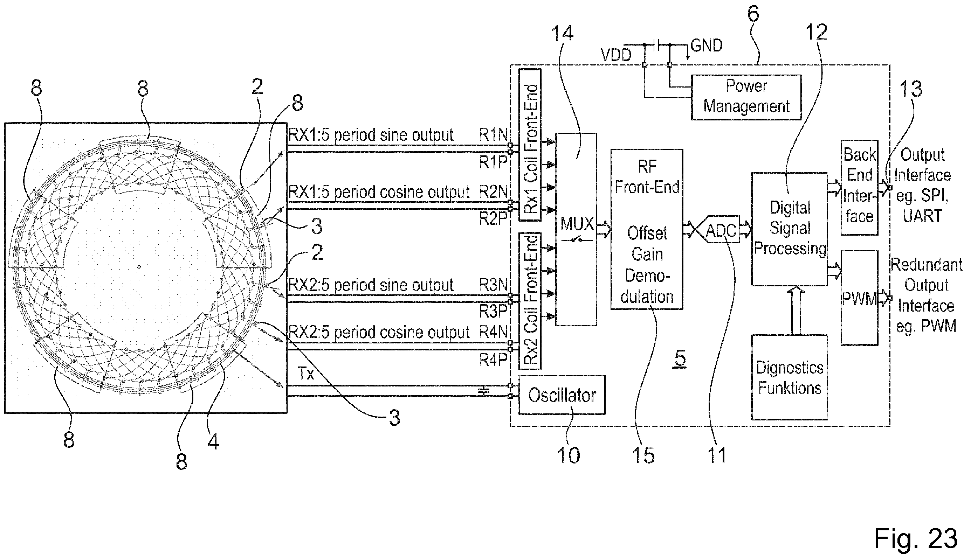

Fig. 23 shows an eleventh embodiment of a position sensor system 1 according to the invention.

The output accuracy can be improved by:

-    performing an n-point end-of-line linearization without the need of an external precision position reference by selecting the average of both phase shifted sensors as the position reference for linearization.

- by taking the average of the two angle outputs

The diagnostic coverage increases by:

- performing a check if the difference between the angle outputs of the two coil sets 2, 3 are exceeding a limit

- checking if amplitude mismatches and offsets or magnitudes and their periodic variations are exceeding limits

The system availability can improve by:

- in case an error in one receiver coil set 2, 3 is detected, the information from the remaining coil in that coil set 2, 3 can be used in combinations with other coils from different receiver coil sets 2, 3 to improve plausibility.

- The failure probability can be reduced by using two sensor coil sets 2, 3 with one signal conditioning and processing circuit 5 instead of two separate parallel circuits 5.

Another example for such implementation is a steering sensor with the requirement for a high-resolution angle output, being absolute within one turn and provides high diagnostic coverage. It is based on the same principle as the circuit shown in Fig. 20 for a linear motion sensor.

In the example below, one receiver coil set is designed for 1 period per mechanical turn, while the second receiver coil set is designed for 8 periods per mechanical turn.

In other embodiments of this configuration, three or more sets of receiver coils can be implemented.

Each receiver (Receiver #1 and Receiver #2 in Fig. 12) can be used for detecting both the same or independent moving target elements and they share one or more transmitter coils on the same chip. The transmitter coil can be placed at the outer circumference of the receiver coil set, as shown in Fig. 13, green circle.

Other embodiments of this invention may have the transmitter coil placed inside the receiver coil set, as shown in Fig. 13, red circle.

A practical implementation of such configuration is shown in Fig. 14. Receiver coil set #1, R1N/R1P and R2N/R2P as well as receiver coil set #2, R3N/R3P and R4N/R4P detect different targets, but share the same transmitter coil; the two transmitter coil sections are connected in series and are fed by the same oscillator.

In other embodiments of the same configurations, the two transmitter coil sections may be connected in parallel are fed by the same oscillator as shown in Fig. 15

In other embodiments of the same configurations, two separate transmitter coils, fed by two independent oscillators may be available as shown in Fig. 16.

A practical implementation of the configuration shown in Fig. 14 to Fig. 16 could be a multiturn sensor having a primary wheel and two attached secondary wheels, each having a slightly different transmission ratio relative to the primary wheel. A metallic target is attached to each of the secondary wheels, each target is detected independently by receiver coil sets #1 and #2, respectively. Such embodiment is shown in Fig. 17.

Note: while the abovementioned multiturn sensor is prior art, the innovative aspect of this example is to use a single IC having two sets of receiver coils instead of using one position sensor for each secondary wheel.

Another embodiment utilizing two receiver coils and one transmitter coils shown in Fig. 18 is a dual receiver coil setup example for creating a long stroke Vernier design using 3 periods on coil set 1 (R1N, RIP, R2N, R2P) and 4 periods on coil set 2 (R3N, R3P, R4N, R4P). The receiver coil sets #1 and #2 may be placed next to each other (as shown in Fig. 18) or placed on top of each other.

Fig. 19 outlines the sensor outputs of the circuit shown in Fig. 18, using 3 phases for Sensor 1 (receiver coils R1,R2) and 4 phases for Sensor 2 (receiver coils R3,R4). In this example, each sensor has 12-bits resolution (4096 steps per phase).

By utilizing the Vernier principle through using the mathematical difference of both signals (dotted line) and correcting negative results (Line "Vernier"), the signal of both sensors can be combined to provide a single unambiguous, linear signal over the full stroke of the sensor, shown as "Vernier" on Fig. 19.

In another embodiment, as shown in Fig. 20, the first receiver coil set 2, 3 is using 4 periods per full stroke length, while the second receiver coil set 2, 3 is using 1 period per full stroke length. This configuration allows an increase of resolution by a factor of four, respectively by the number of phases of coil set #1.

While the position obtained from coil set #1 is ambiguous, providing four possible positions within the full stoke length, the positon obtained from coil set #2 is unambiguous, providing only one possible position within the full stroke length.

However due to the long stretch of coil set #2, it provides reduced resolution, for example 4096 steps over the full stoke length, while the first coil set #1 provides $4 \times 4096 = 16384$ positions over the full stroke length. By analyzing the position of coil set #2, the period on coil set #1 over which the target is moving, can be determined and thus, an unambiguous, high-resolution position detection is possible, providing an absolute position with 16384 positions over the full stroke length.

Other embodiments of the same implementation may use different resolutions than 4096 steps per period.

In the same manner as the embodiment shown in Fig. 18, the embodiment of Fig. 20 may be placing coil sets #1 and #2 next to each other or on top of each other.

Shown in Figs. 21 and 22 are two possible implementations of a multi-receiver coil set position sensor on a single chip. In Fig. 21, two sets of receiver coils are processed sequentially, selected by a multiplexer (MUX) at the RF front-end block. This set-up requires fewer building blocks, as it utilizes the same chain of signal processing, following the multiplexer (MUX) for both receiver coil sets.

In another embodiment, this principle may be applied to more than two receiver coil sets.

In Fig. 22, the two sets of receiver coils are processed in parallel channels, essentially doubling the processing speed. This setup is particularly useful for applications requiring fast data rates and low or no signal delay between each receiver coil set.

Fig. 23 shows an eleventh embodiment of a position sensor system 1 according to the invention. In this eleventh embodiment, both receiver coil sets 2, 3 are designed for 5 period per mechanical turn.

The signal-processing unit converts the input voltages into digital values. Offsets and amplitude mismatch of these signals is compensated. The angle information is calculated based on the compensated input data and the phase shift between the two coil sets is digitally removed.

The output accuracy can be improved by:

- performing an n-point end-of-line linearization without the need of an external precision position reference by selecting the average of both phase shifted sensors as the position reference for linearization.

- by taking the average of the two angle outputs

The diagnostic coverage increases by:

- performing a check if the difference between the angle outputs of the two coil sets are exceeding a limit

- checking if amplitude mismatches and offsets or magnitudes and their periodic variations are exceeding limits

The system availability can improve by:

- in case an error in one receiver coil set is detected, the information from the remaining coil in that coil set can be used in combinations with other coils from different receiver coil sets to improve plausibility.
- The failure probability can be reduced by using two sensor coil sets with one signal conditioning and processing circuit instead of two separate parallel circuits

A twelfth embodiment of a position sensor system 1 according to the invention refers to a steering sensor with the requirement for a high-resolution angle output, being absolute within one turn and provides high diagnostic coverage.

It is based on the same principle as the circuit shown in Fig. 20 for a linear motion sensor.

In this twelfth embodiment, one receiver coil set 2, 3 is designed for 1 period per mechanical turn, while the second receiver coil set 2, 3 is designed for 8 periods per mechanical turn.

Using the first receiver coil set 2, 3, the absolute angle is calculated. The target element 8 must be designed to generate sufficient signal amplitude for the absolute one-periodic as well as for the high-resolution sensor.

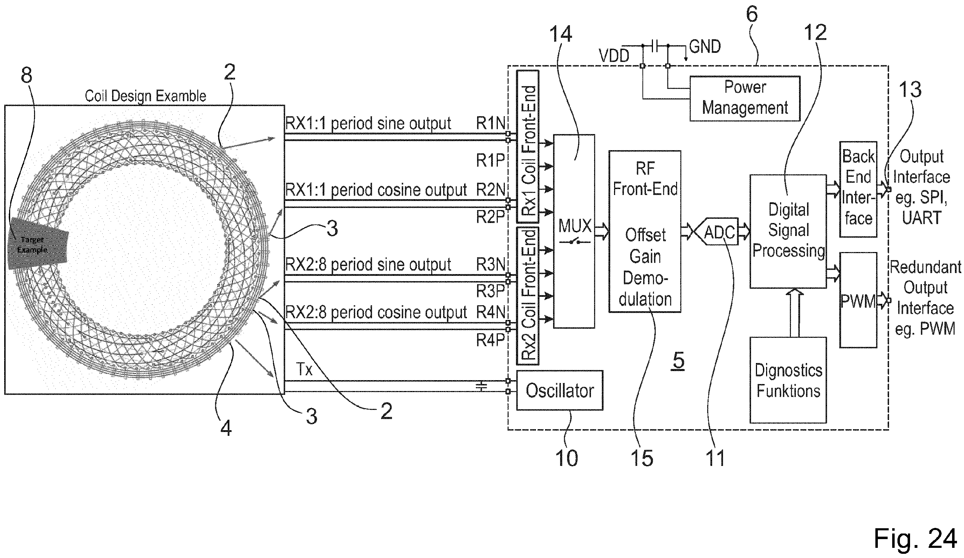

The resolution of the sensor 1 is increased by using a high-resolution incremental multipole receiver coil. Fig. 24 shows a configuration with eight output periods per one revolution which results in an eight times higher resolution compared to the single period absolute sensor. The accuracy can as well be improved this way depending on the mechanical setup and target 8 configuration.

The diagnostic coverage can be increased by plausibility calculations of the two separate coil sets 2, 3.

Some coil architectures may have benefits among others. For example, arc designs, mounted at the side of the shaft 9 require a relatively small area compared to full 360° shaped circular designs. In spite of such advantages, they show some disadvantages like reduced angle accuracy in case there is a displacement in radial direction. A second or third receiver coil set 2, 3, designed to measure radial displacement may be used to indicate and to compensate possible errors resulting from target 8 eccentricity.

The present invention particularly refers to the following twelve aspects:

1. Position sensor having two or more sets 2, 3 of receiver coils 2, 3 on the same chip 7, providing information of both sensors by means of output interfaces 13, such as, but not limited to analog voltage, current modulation, PSI-5, Pulse width modulation (PWM), Single Edge Nibble Transmission Protocol (SENT), I2C protocol, Serial Peripheral Interface (SPI), Universal Asynchronous Receiver Transmitter (UART), CAN, or LIN.

2. Inductive position sensing system 1 having two or more receiver coil sets 2, 3 with shared transmitter coil 4, shared signal conditioning and processing unit 5 on the same silicon chip 6.

3. Inductive position sensing system 1 having two or more receiver coil sets 2, 3 with shared transmitter coil 4, separated signal conditioning and processing unit 5 on the same silicon chip 6.

4. Inductive position sensing system 1 having two or more receiver coil sets 2, 3 with separated transmitter coils 4, shared signal conditioning and processing unit 5 on the same silicon chip 6.

5. Inductive position sensing system 1 having two or more receiver coil sets 2, 3 with separated transmitter coils 4, signal conditioning and processing unit 5on the same silicon chip 6.

6. Inductive position sensing system 1 according to any of aspects 1 to 5, providing separated output signal information for each receiver coil set 2, 3.

7. Inductive position sensing system according to any of aspects 1 to 6, providing combined output signal information for all receiver coil sets 2, 3.

8. Inductive position sensing system 1 according to any of aspects 1 to 7, generating an absolute high resolution position from two or more receiver signals.

9. Inductive position sensing system 1 according to any of aspects 1 to 8, generating a differential signal from two or more coils 2, 3, which are preferably on the same chip 7.

10. Inductive position sensing system 1 according to any of aspects 1 to 9, improving the position output accuracy by using additional coil inputs for determining disturbing quantities and compensating for these.

11. Implementing an inductive position sensing system 1 according to any of aspects 1 to 10 on the same silicon chip 6.

12. Implementation according to aspect 11 by using a metallic conducting target 8 or any other target structure 8 that is modifying the electromagnetic field generated by the excitation coils 4.

**List of reference numerals**

1    position sensor system
2    sine receiver coil
3    cosine receiver coil
4    transmitter coil
5    signal conditioning and processing unit
6    integrated circuit
7    printed circuit board
8    target
9    shaft
10    oscillator
11    analog-to-digital converter
12    digital signal processor
13    output interface
14    multiplexer
15    RF signal receiver and processor

**Claims**

1. Position sensor system, particularly inductive position sensor system, comprising at least two receiver coil sets, at least one transmitter coil and a signal conditioning and processing unit,

   wherein in each receiver coil set comprises at least two separate receiver coils, particularly a sine receiver coil and a cosine receiver coil, **characterized in that** the signal conditioning and processing unit is contained in a single integrated circuit and that the at least two receiver coil sets, the at least one transmitter coil and the integrated circuit containing the signal conditioning and processing unit are located on a single printed circuit board.

2. Position sensor system according to claim 1, wherein the signal conditioning and processing unit comprises a separate receiver channel for each receiver coil set or a shared receiver channel and a multiplexer for multiplexing the at least two receiver coil sets sequentially to the shared receiver channel.

3. Position sensor system according to claim 2, wherein each receiver channel comprises a radio-frequency signal receiver and processor, an analog-to-digital converter and a digital signal processor.

4. Position sensor system according to any of claims 1 to 3, wherein the signal conditioning and processing unit comprises an oscillator for generating a radio-frequency signal for the at least one transmitter coil.

5. Position sensor system according to claim 4, comprising a shared transmitter coil for the at least two receiver coil sets, which is connected to the oscillator of the signal conditioning and processing unit.

6. Position sensor system according to claim 4, comprising separate transmitter coils for the at least two receiver coil sets, wherein the separate receiver coil sets are connected in series or parallel to the oscillator of the signal conditioning and processing unit.

7. Position sensor system according to any of claims 1 to 6, wherein the signal conditioning and processing unit has a common output, particularly for providing a combined output signal information for all receiver coil sets respectively all receiver channels of the signal conditioning and processing unit.

8. Position sensor system according to any of claims 1 to 7, further comprising at least one moving target, particularly at least one metallic moving target or any other target structure that is modifying the electromagnetic field of the at least of transmitter coil.

9.  Position sensor system according to any of claims 1 to 8, wherein the inductive position sensor system is a linear, arc or rotary motion sensor.

10. Position sensor system according to any of claims 1 to 9, wherein the at least one transmitter coil is arranged outside the at least two receiver coil sets, particularly at the outer circumference of the at least two receiver coil sets, or inside a blank space provided by the at least two receiver coil sets.

11. Position sensor system according to any of claims 1 to 9, wherein the position sensor system generates a high-resolution position signal from the at least two receiver coil sets or a differential signal from the at least two receiver coil sets.

Fig. 1

Fig. 2

RxSin

Tx

RxCOS

Metallic Target

2

2

4

3

3

8

3

**Fig. 3**

3

2

4

3

2

8

2

**Fig. 4**

Fig. 5

Fig. 6

Fig. 7

Fig. 8

Fig. 9

EP 3 988 903 A1

Fig. 10

Fig. 11

Fig. 12

Fig. 13

Fig. 14

Fig. 15

Fig. 16

Fig. 17

Coil set 1 (R1, R2):3 periods

Coil set 2 (R3, R4):4 periods

R1N
R1P
R2N
R2P

5

Position
Sensor
IC

Tx

R3N
R3P
R4N
R4P

EP 3 988 903 A1

Fig. 18

Fig. 19

EP 3 988 903 A1

Fig. 20

Fig. 21

Fig. 22

EP 3 988 903 A1

Fig. 23

Output Interface eg. SPI, UART

Redundant Output Interface eg. PWM

Back End Interface

PWM

13

Digital Signal Processing

12

Power Management

6

Dignostics Funktions

VDD

GND

ADC

11

RF Front-End

Offset Gain Demodulation

5

15

MUX

14

Rx1 Coil Front-End

Rx2 Coil Front-End

Oscillator

10

R1N
R1P
R2N
R2P
R3N
R3P
R4N
R4P

RX1:5 period sine output

RX1:5 period cosine output

RX2:5 period sine output

RX2:5 period cosine output

Tx

2
8
2
3
2
3
8
8
4
8
8

Fig. 24

EP 3 988 903 A1

Europäisches
Patentamt
European
Patent Office
Office européen
des brevets

# EUROPEAN SEARCH REPORT

**Application Number**

EP 21 19 0602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/278190 A1 (BERTINI GIOVANNI [DE] ET AL) 3 September 2020 (2020-09-03) | 1,2,5-11 | INV. G01D5/20 |
| Y | * paragraph [0003] * <br> * paragraph [0022] - paragraph [0023] * <br> * paragraph [0026] * <br> * paragraph [0042] - paragraph [0044]; figures 6A, 6B, 6C * <br> * paragraph [0047] * | 3,4 | |
| Y | WO 2020/171840 A1 (MICROSEMI CORP [US]) 27 August 2020 (2020-08-27) <br> * paragraph [0004] - paragraph [0005] * <br> * paragraph [0011] - paragraph [0012] * | 3,4 | |
| A | US 2004/227644 A1 (LIN YINGJIE [US] ET AL) 18 November 2004 (2004-11-18) <br> * paragraph [0019] - paragraph [0021] * <br> * paragraph [0025] * <br> * paragraph [0036]; figures 10,11 * | 1-11 | |

**TECHNICAL FIELDS SEARCHED (IPC)**

G01D

The present search report has been drawn up for all claims

| Place of search | Date of completion of the search | Examiner |
|---|---|---|
| Munich | 24 January 2022 | Bossen, Michael |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..............................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 19 0602

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2022

| Patent document cited in search report | | Publication date | Patent family member(s) | | Publication date |
|---|---|---|---|---|---|
| US 2020278190 | A1 | 03-09-2020 | CN 111637831 A | | 08-09-2020 |
| | | | EP 3702738 A1 | | 02-09-2020 |
| | | | US 2020278190 A1 | | 03-09-2020 |
| WO 2020171840 | A1 | 27-08-2020 | CN 113424025 A | | 21-09-2021 |
| | | | DE 112019006893 T5 | | 04-11-2021 |
| | | | US 2020271480 A1 | | 27-08-2020 |
| | | | WO 2020171840 A1 | | 27-08-2020 |
| US 2004227644 | A1 | 18-11-2004 | NONE | | |

EPO FORM P0459

For more details about this annex : see Official Journal of the European Patent Office, No. 12/82